# FASCICULE DE BREVET EUROPEEN

(11) **EP 4 167 021 B1**
(45) Date de publication et mention de la délivrance du brevet: **06.08.2025**
(21) Numéro de dépôt: 22201185.0
(22) Date de dépôt: 12.10.2022
(51) Int. Cl.: G02C 5/14, G02C 5/22

(54) **MONTURE DE LUNETTES COMPORTANT UNE CHARNIERE PARTICULIERE**
BRILLENGESTELL MIT EINEM SPEZIELLEN SCHARNIER
EYEGLASS FRAME HAVING A PARTICULAR HINGE

(30) Priorité: 14.10.2021 FR 2110883
(43) Date de publication de la demande: 19.04.2023
(73) Titulaire: BLI-DBP, 13011 Marseille (FR)
(72) Inventeur: MOLLARD, Olivier, 13011 Marseille (FR)
(74) Mandataire: Cabinet Le Guen Maillet

(56) Documents cités:
- WO-A1-2011/117909
- CN-C- 1 066 263
- CN-U- 206 161 983
- US-A1- 2019 204 618

## Description

### DOMAINE TECHNIQUE

La présente invention concerne une monture de lunettes comportant une charnière pour une branche.

### ÉTAT DE LA TECHNIQUE ANTÉRIEURE

Une monture de lunettes comporte classiquement une face qui supporte les verres et deux branches qui sont montées articulées sur la face. À cette fin, pour chaque branche, la monture présente une charnière articulée entre la face et la branche.

Il existe différents types de charnières. La plupart des charnières utilise une vis qui constitue l'axe de rotation de la charnière. La vis doit pouvoir être retirée lorsqu'il est nécessaire de changer la branche. À force de manipulation, il arrive que la vis se dévisse et il est alors nécessaire de la visser à nouveau. En outre, si la vis se dévisse entièrement, il y a un risque de perte de la vis et il n'est plus possible d'utiliser la monture car la branche est désolidarisée.

Le document CN-U-206 161 983 et le document US-A-2019/204618 divulguent une monture de lunettes selon le préambule de la revendication 1 mais il n'est pas prévu de moyen évitant une déformation de la branche lorsqu'elle est ouverte au-delà d'une position normale.

### EXPOSÉ DE L'INVENTION

Un objet de la présente invention est de proposer une monture de lunettes comportant une charnière pour une branche dont l'axe n'est pas constitué d'une vis et qui permet cependant le démontage de la branche.

À cet effet, est proposée une monture de lunettes comportant :
- une face,
- deux branches, chacune étant montée mobile en rotation sur la face autour d'un axe de rotation entre une position ouverte et une position fermée, et comportant une première partie et une deuxième partie pliée sur elle-même, où la deuxième partie présente une bande supérieure et une bande inférieure où chaque bande présente une première extrémité qui est d'un côté d'un extremum et qui est solidaire de la première partie et une deuxième extrémité qui est libre et qui est de l'autre côté de l'extremum, où les deux bandes sont écartées l'une de l'autre et présentent un interstice entre les deux bandes qui sont reliées l'une à l'autre par une barrette au voisinage de leurs deuxièmes extrémités, et
- pour chaque branche, un tenon solidaire de la face et portant un crochet qui est traversé de part en part parallèlement à l'axe de rotation par une fente présentant une ouverture orientée vers l'ouverture de la fente de l'autre tenon, où le tenon loge dans l'interstice et où la barrette est logée dans la fente et peut tourner dans la fente autour de l'axe de rotation, où le tenon comporte une première surface d'appui qui est parallèle à la première partie lorsque la branche est en position ouverte et contre laquelle se positionne ladite première partie en position ouverte, et une première distance entre la première surface d'appui et l'axe de rotation est supérieure à un écartement minimal entre la première partie et la barrette lorsque la branche n'est pas montée dans la fente, où le tenon présente entre la première surface d'appui et la face, un évidement en retrait vers l'intérieur par rapport à la première surface d'appui,
la monture étant caractérisée en ce que l'interstice s'étend de part et d'autre de l'extrémum et jusqu' à la première partie où l'interstice présente un fond, de manière à ce qu'une rotation supplémentaire de la branche autour de l'axe de rotation au-delà de la position ouverte amène le fond de l'interstice contre une paroi du tenon qui délimite l'évidement.

Une telle charnière est ainsi facile à réaliser et ne comporte pas de pièce additionnelle comme par exemple des vis et prévient les déformations de la branche lorsqu'elle est ouverte au-delà de la position ouverte.

Avantageusement, le tenon comporte une deuxième surface d'appui qui est parallèle à la première partie lorsque la branche est en position fermée et contre laquelle se positionne ladite première partie en position fermée, et une deuxième distance entre la deuxième surface d'appui et l'axe de rotation est supérieure à l'écartement minimal.

Avantageusement, à l'intersection de la première surface d'appui et de la deuxième surface d'appui, le tenon présente un coin, et la distance entre l'axe de rotation et le coin est supérieure à la première distance et à la deuxième distance.

Avantageusement, le tenon présente autour de la fente, une surépaisseur sur chaque face du tenon perpendiculaire à l'axe de rotation.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de dessus d'une monture de lunettes comportant une charnière selon l'invention en position ouverte des branches,
Fig. 2 est une vue similaire à la Fig. 1 en position fermée des branches,
Fig. 3 est une vue en perspective d'un tenon de la charnière selon l'invention,
Fig. 4 est une vue de côté selon la flèche III de la Fig. 1 d'une branche de la charnière selon l'invention,
Fig. 5 est une vue similaire à la Fig. 1 en position intermédiaire instable entre la position ouverte et la position fermée, et
Fig. 6 est une vue similaire à la Fig. 1 en position d'ouverture forcée au-delà de la position ouverte.

### EXPOSÉ DÉTAILLÉ DE MODES DE RÉALISATION

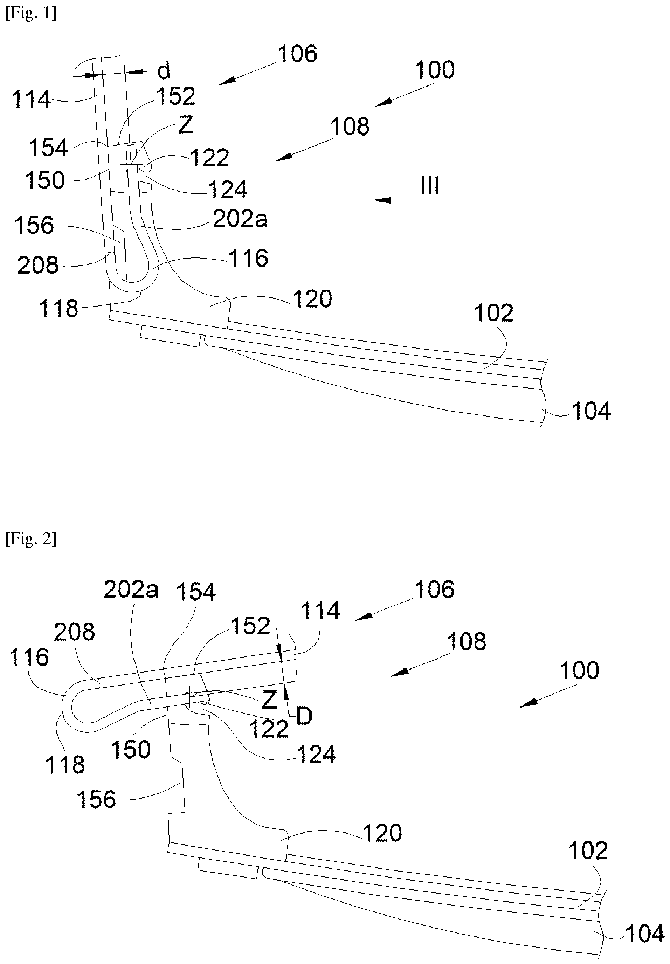

La Fig. 1 et la Fig. 2 montrent une monture 100 de lunettes qui présente une face 102 qui porte deux verres 104 mais dont un seul est visible sur la Fig. 1.

La monture 100 présente également de chaque côté de la face 102, une branche 106 et une charnière 108 qui relie de manière articulée la branche 106 à la face 102. La charnière 108 présente un axe de rotation Z globalement vertical lorsque la monture 100 est en position d'utilisation sur le porteur de lunettes. La charnière 108 et les branches 106 sont à l'arrière de la face 102 par rapport à l'orientation de la tête. Chaque branche 106 est ainsi montée mobile en rotation sur la face 102 autour de l'axe de rotation Z.

La branche 106 est constituée d'une armature fine et flexible et dans un matériau présentant des propriétés ressort, comme par exemple en métal. Une telle armature peut également être recouverte d'un manchon en matière plastique comme en acétate par exemple. Le manchon comporte alors un logement dans lequel se glisse l'armature.

La branche 106 comprend une première partie 114 qui est globalement rectiligne et qui, entre autres, vient en appui contre la tête du porteur de lunettes, en particulier au-dessus de l'oreille et une deuxième partie 116 qui est solidaire de la première partie 114 et qui est une partie pliée sur elle-même ici globalement à 180°. La deuxième partie 116 présente ainsi un extremum 118 correspondant à un pli et elle s'étend de part et d'autre de cet extremum 118.

La deuxième partie 116 est constituée d'une portion de l'armature pliée sur elle-même.

La deuxième partie 116 est du côté intérieur par rapport à la première partie 114, c'est-à-dire du côté de la tête.

La deuxième partie 116 est disposée au niveau de la charnière 108 et en constitue une partie et la Fig. 1 montre la charnière 108 en position ouverte des branches 106 et la Fig. 2 montre la charnière 108 en position fermée des branches 106.

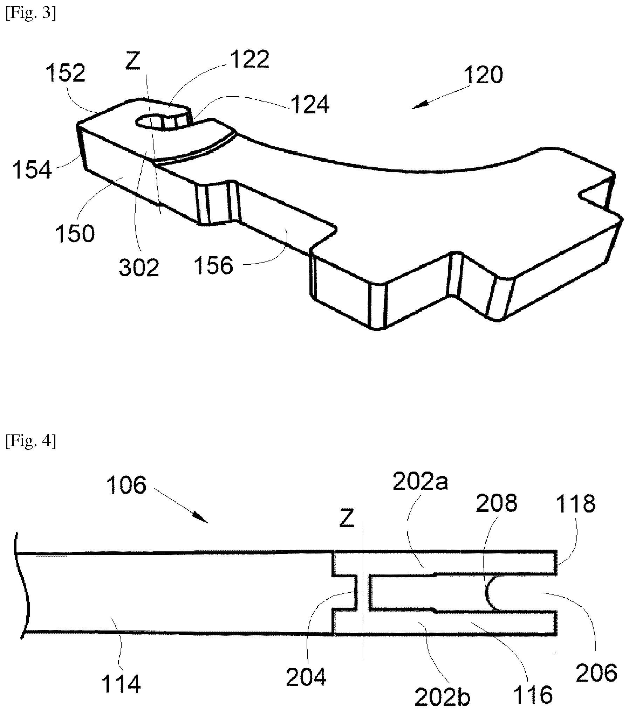

Comme le montre la Fig. 4, la partie courbée 116 présente une bande supérieure 202a et une bande inférieure 202b où chaque bande 202a-b présente une première extrémité qui est d'un côté de l'extremum 118 et qui est solidaire de la première partie 114 et une deuxième extrémité qui est libre et qui est de l'autre côté de l'extremum 118.

Les deux bandes 202a-b sont ici identiques et parallèles entre elles et chacune s'étend dans un plan perpendiculaire à l'axe de rotation Z.

Les deux bandes 202a-b sont écartées l'une de l'autre parallèlement à l'axe de rotation Z et la branche 106 présente un interstice 206 entre les deux bandes 202a-b.

Les deux bandes 202a-b sont reliées l'une à l'autre par une barrette 204 au voisinage de la deuxième extrémité de chaque bande 202a-b. La barrette 204 matérialise l'axe de rotation Z. La barrette 204 traverse l'interstice 206.

L'interstice 206 s'étend de part et d'autre de l'extrémum 118 et en particulier jusqu'à la première partie 114 où l'interstice 206 présente un fond 208.

Chaque charnière 108 présente un tenon 120 représenté sur la Fig. 3. Le tenon 120 est solidaire de la face 102 et s'étend vers l'arrière de la face 102.

Le tenon 120 porte un crochet 122 qui est traversé de part en part parallèlement à l'axe de rotation Z par une fente 124.

Lorsque la branche 106 est montée sur le tenon 120, le tenon 120 loge dans l'interstice 206 avec la bande supérieure 202a au-dessus du tenon 120 et la bande inférieure 202b au-dessous du tenon 120 et la barrette 204 est logée dans la fente 124 et peut tourner dans la fente 124 autour de l'axe de rotation Z. Le fond de la fente 124 est orienté vers l'arrière et l'extérieur par rapport à l'ouverture de la fente 124.

La fente 124 présente une ouverture orientée vers l'intérieur, c'est-à-dire vers l'ouverture de la fente 124 de l'autre tenon 120, c'est-à-dire vers la tête lorsque la monture 100 est en place, pour permettre le passage de la barrette 204 lors de son montage ou démontage.

Une telle charnière 108 est ainsi facile à réaliser et ne comporte pas de pièce additionnelle comme par exemple des vis.

Lors du montage, le tenon 120 est introduit dans l'interstice 206 en présentant la barrette 204 en face de l'ouverture de la fente 124, puis en forçant l'introduction de la barrette 204 dans la fente 124.

Le tenon 120 comporte une première surface d'appui 150 qui est parallèle à la première partie 114 lorsque la branche 106 est en position ouverte (Fig. 1) et contre laquelle se positionne ladite première partie 114 en position ouverte. La première surface d'appui 150 est parallèle à l'axe de rotation Z.

La première distance 'd' entre la première surface d'appui 150 et l'axe de rotation Z est supérieure à un écartement minimal entre la première partie 114 et la barrette 204 lorsque la branche 106 n'est pas montée dans la fente 124, c'est-à-dire lorsque la branche 106 n'est pas montée et que l'élasticité de la deuxième partie 116 la contraint dans une position naturellement plus serrée.

Ainsi, lorsque la branche 106 est dans la fente 124 et en position ouverte, la première partie 114 est en appui contre la première surface d'appui 150, et l'écartement entre la première partie 114 et la barrette 204 est supérieur à l'écartement minimal, et du fait de l'élasticité de la branche 106, la branche 106 génère une force de serrage sur le tenon 120 et la branche 106 est maintenue fermement en position ouverte.

Le tenon 120 comporte une deuxième surface d'appui 152 qui est parallèle à la première partie 114 lorsque la branche 106 est en position fermée (Fig. 2) et contre laquelle se positionne ladite première partie 114 en position fermée. La deuxième surface d'appui 152 est parallèle à l'axe de rotation Z.

La deuxième distance 'D' entre la deuxième surface d'appui 152 et l'axe de rotation Z est supérieure à l'écartement minimal.

Ainsi, lorsque la branche 106 est dans la fente 124 et en position fermée, la première partie 114 est en appui contre la deuxième surface d'appui 152, et l'écartement entre la première partie 114 et la barrette 204 est supérieur à l'écartement minimal, et du fait de l'élasticité de la branche 106, la branche 106 génère une force de serrage sur le tenon 120 et la branche 106 est maintenue fermement en position fermée.

À l'intersection de la première surface d'appui 150 et de la deuxième surface d'appui 152, le tenon 120 présente un coin 154 prenant la forme d'une ligne parallèle à l'axe de rotation Z. La distance entre l'axe de rotation Z et le coin 154 est supérieure à la première distance 'd' et à la deuxième distance 'D'.

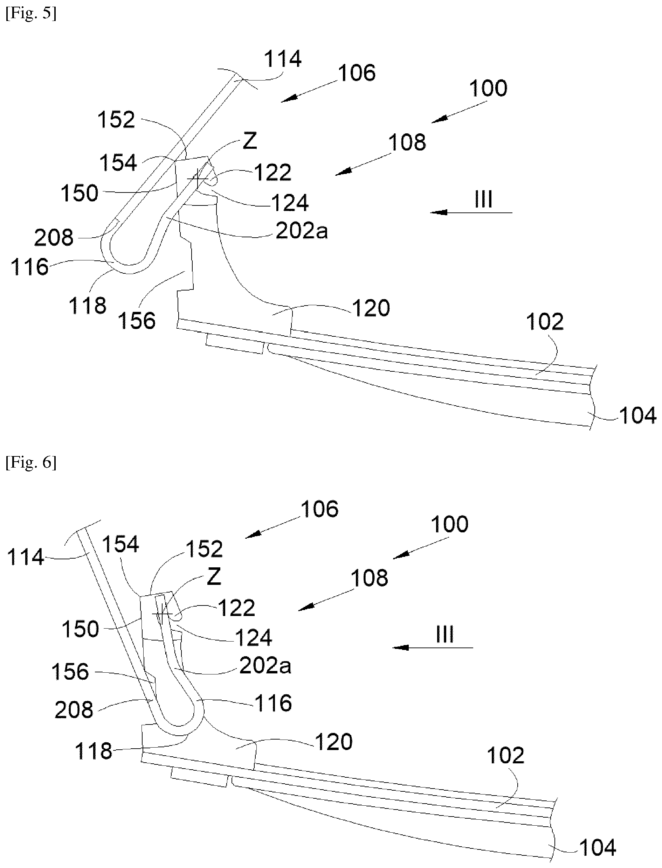

La Fig. 5 montre le passage de la branche 106 au niveau du coin 154 lors du déplacement entre la position ouverte et la position fermée et inversement, la première partie 114 et la barrette 204 s'écartent plus que lorsque la branche 106 est en position ouverte ou fermée. La distance entre la première partie 114 et la barrette 204 est alors supérieure à la première distance 'd' et à la deuxième distance 'D', générant ainsi une force de serrage supérieure à celles générées lorsque la branche 106 est en position ouverte et fermée et créant ainsi une position instable de la branche 106 au niveau du coin 154. Selon la position de la branche 106 par rapport au coin 154, la branche 106 a alors tendance à se positionner automatiquement en position ouverte ou fermée.

Le tenon 120 présente entre la première surface d'appui 150 et la face 102, un évidement 156 en retrait vers l'intérieur par rapport à la première surface d'appui 150.

Un tel arrangement autorise à la branche 106, une rotation supplémentaire autour de l'axe de rotation Z au-delà de la position ouverte sans que la branche 106 ne se torde. La Fig. 6 montre la monture 100 dans une telle position forcée au-delà de la position ouverte.

En effet, la branche 106 pivote de manière à amener le fond 208 de l'interstice 206 contre la paroi du tenon 120 qui délimite l'évidement 156, c'est-à-dire au-delà de la position ouverte et sans subir de contraintes supplémentaires. La paroi du tenon 120 contre laquelle vient en butée le fond 208 est globalement parallèle à la première surface d'appui 150 et en retrait par rapport à elle. En outre, cette rotation supplémentaire écarte la première partie 114 et la barrette 204 au-delà de l'écartement minimal, et lorsque la pression exercée sur la branche 106 est relâchée, celle-ci revient dans la position ouverte sous l'effet du rappel dû à l'écartement au-delà de l'écartement minimal.

Pour limiter la friction entre les bandes 202a-b et le tenon 120, celui-ci présente autour de la fente 124, une surépaisseur 302 sur chaque face du tenon 120 perpendiculaire à l'axe de rotation Z.

La surépaisseur 302 est par exemple comprise entre 0,3 mm et 0,5 mm sur un cercle avec un rayon de l'ordre de 3 mm autour de l'axe de rotation Z.

## Revendications

1. Monture (100) de lunettes comportant :
- une face (102),
- deux branches (106), chacune étant montée mobile en rotation sur la face (102) autour d'un axe de rotation (Z) entre une position ouverte et une position fermée, et comportant une première partie (114) et une deuxième partie (116) pliée sur elle-même, où la deuxième partie (116) présente une bande supérieure (202a) et une bande inférieure (202b) où chaque bande (202a-b) présente une première extrémité qui est d'un côté d'un extremum (118) et qui est solidaire de la première partie (114) et une deuxième extrémité qui est libre et qui est de l'autre côté de l'extremum (118), où les deux bandes (202a-b) sont écartées l'une de l'autre et présentent un interstice (206) entre les deux bandes (202a-b) qui sont reliées l'une à l'autre par une barrette (204) au voisinage de leurs deuxièmes extrémités, et
- pour chaque branche (106), un tenon (120) solidaire de la face (102) et portant un crochet (122) qui est traversé de part en part parallèlement à l'axe de rotation (Z) par une fente (124) présentant une ouverture orientée vers l'ouverture de la fente (124) de l'autre tenon (120), où le tenon (120) loge dans l'interstice (206) et où la barrette (204) est logée dans la fente (124) et peut tourner dans la fente (124) autour de l'axe de rotation (Z), où le tenon (120) comporte une première surface d'appui (150) qui est parallèle à la première partie (114) lorsque la branche (106) est en position ouverte et contre laquelle se positionne ladite première partie (114) en position ouverte, et où une première distance ('d') entre la première surface d'appui (150) et l'axe de rotation (Z) est supérieure à un écartement minimal entre la première partie (114) et la barrette (204) lorsque la branche (106) n'est pas montée dans la fente (124), où le tenon (120) présente entre la première surface d'appui (150) et la face (102), un évidement (156) en retrait vers l'intérieur par rapport à la première surface d'appui (150),
la monture (100) étant **caractérisée en ce que** l'interstice (206) s'étend de part et d'autre de l'extrémum (118) et jusqu'à la première partie (114) où l'interstice (206) présente un fond (208), de manière à ce qu'une rotation supplémentaire de la branche (106) autour de l'axe de rotation (Z) au-delà de la position ouverte amène le fond (208) de l'interstice (206) contre une paroi du tenon (120) qui délimite l'évidement (156).

2. Monture (100) selon la revendication 1, **caractérisée en ce que** le tenon (120) comporte une deuxième surface d'appui (152) qui est parallèle à la première partie (114) lorsque la branche (106) est en position fermée et contre laquelle se positionne ladite première partie (114) en position fermée, et **en ce qu'**une deuxième distance ('D') entre la deuxième surface d'appui (152) et l'axe de rotation (Z) est supérieure à l'écartement minimal.

3. Monture (100) selon la revendication 2, **caractérisée en ce qu'**à l'intersection de la première surface d'appui (150) et de la deuxième surface d'appui (152), le tenon (120) présente un coin (154), et **en ce que** la distance entre l'axe de rotation (Z) et le coin (154) est supérieure à la première distance ('d') et à la deuxième distance ('D').

4. Monture (100) selon l'une des revendications 1 à 3, **caractérisée en ce que** le tenon (120) présente autour de la fente (124), une surépaisseur (302) sur chaque face du tenon (120) perpendiculaire à l'axe de rotation (Z).

## Patentansprüche

1. Brillengestell (100) umfassend:
- eine Stirnseite (102),
- zwei Bügel (106), wobei jeder auf der Stirnseite (102) um eine Drehachse (Z) zwischen einer offenen Position und einer geschlossenen Position drehbeweglich gelagert ist und einen ersten Abschnitt (114) und einen zweiten Abschnitt (116), der um sich selbst gebogen ist, aufweist, wobei der zweite Abschnitt (116) einen oberen Streifen (202a) und einen unteren Streifen (202b) aufweist, wobei jeder Streifen (202a-b) ein erstes Ende, das sich auf einer Seite eines Extremums (118) befindet und das mit dem ersten Abschnitt (114) fest verbunden ist, und ein zweites Ende, das frei ist und das sich auf der anderen Seite des Extremums (118) befindet, aufweist, wobei die zwei Streifen (202a-b) voneinander beabstandet sind und einen Zwischenraum (206) zwischen den zwei Streifen (202a-b) aufweisen, die durch einen Steg (204) in der Nähe ihrer zweiten Enden miteinander verbunden sind, und
- für jeden Bügel (106) einen Zapfen (120), der mit der Stirnseite (102) fest verbunden ist und einen Haken (122) trägt, der von einer Seite zur anderen parallel zur Drehachse (Z) von einem Spalt (124) durchquert wird, der eine Öffnung aufweist, die hin zur Öffnung des Spalts (124) des anderen Zapfens (120) orientiert ist, wobei der Zapfen (120) in dem Zwischenraum (206) sitzt und wobei der Steg (204) in dem Spalt (124) sitzt und sich in dem Spalt (124) um die Drehachse (Z) drehen kann, wobei der Zapfen (120) eine erste Auflagefläche (150) aufweist, die parallel zum ersten Abschnitt (114) verläuft, wenn sich der Bügel (106) in offener Position befindet, und gegen die sich der erste Abschnitt (114) in offener Position positioniert, und wobei ein erster Abstand ('d') zwischen der ersten Auflagefläche (150) und der Drehachse (Z) größer als ein Mindestabstand zwischen dem ersten Abschnitt (114) und dem Steg (204) ist, wenn der Bügel (106) nicht im Spalt (124) montiert ist, wobei der Zapfen (120) zwischen der ersten Auflagefläche (150) und der Stirnseite (102) eine Aussparung (156) aufweist, die im Verhältnis zur ersten Auflagefläche (150) zum Inneren hin zurückgesetzt ist,
wobei das Gestell (100) **dadurch gekennzeichnet ist, dass** sich der Zwischenraum (206) beiderseits des Extremums (118) und bis zum ersten Abschnitt (114) erstreckt, wobei der Zwischenraum (206) einen Boden (208) aufweist, so dass eine zusätzliche Drehung des Bügels (106) um die Drehachse (Z) über die offene Position hinaus den Boden (208) des Zwischenraums (206) gegen eine Wand des Zapfens (120) bringt, die die Aussparung (156) begrenzt.

2. Gestell (100) nach Anspruch 1, **dadurch gekennzeichnet, dass** der Zapfen (120) eine zweite Auflagefläche (152) umfasst, die parallel zum ersten Abschnitt (114) verläuft, wenn sich der Bügel (106) in geschlossener Position befindet, und gegen die sich der erste Abschnitt (114) in geschlossener Position positioniert, und dadurch, dass ein zweiter Abstand ('D') zwischen der zweiten Auflagefläche (152) und der Drehachse (Z) größer als der Mindestabstand ist.

3. Gestell (100) nach Anspruch 2, **dadurch gekennzeichnet, dass** an der Schnittlinie der ersten Auflagefläche (150) und der zweiten Auflagefläche (152) der Zapfen (120) eine Ecke (154) aufweist, und dadurch, dass der Abstand zwischen der Drehachse (Z) und der Ecke (154) größer als der erste Abstand zwischen ('d') und der zweite Abstand ('D') ist.

4. Gestell (100) nach einem der Ansprüche 1 bis 3, **dadurch gekennzeichnet, dass** der Zapfen (120) um den Spalt (124) eine Überdicke (302) auf jeder Seite des Zapfens (120) senkrecht zur Drehachse (Z) aufweist.

## Claims

1. Eyeglass frame (100) comprising:
- one face (102),
- two temples (106), each being rotatably mounted on the face (102) about a axis of rotation (Z) between an open position and a closed position, and comprising a first part (114) and a second part (116) folded back on itself, wherein the second part (116) has an upper strip (202a) and a lower strip (202b), wherein each strip (202a-b) has a first end which is on one side of an extremum (118) and which is integral with the first part (114) and a second end which is free and which is on the other side of the extremum (118), wherein the two strips (202a-b) are spaced apart from each other and have a gap (206) between the two strips (202a-b) which are connected to each other by a bar (204) in the vicinity of the second ends thereof, and
- for each temple (106), a lug (120) integral with the face (102) and having a hook (122) which is traversed from one side to the other parallel to the axis of rotation (Z) by a slot (124) having an opening facing the opening of the slot (124) of the other lug (120), wherein the lug (120) fits into the gap (206) and wherein the bar (204) is fitted into the slot (124) and can rotate in the slot (124) about the axis of rotation (Z), wherein the lug (120) comprise a first bearing surface (150) which is parallel to the first part (114) when the temple (106) is in the open position and against which the said first part (114) is positioned in the open position, and wherein a first distance ('d') between the first bearing surface (150) and the axis of rotation (Z) is greater than a minimum spacing between the first part (114) and the bar (204) when the temple (106) is not mounted in the slot (124), wherein the lug (120) has, between the first bearing surface (150) and the face (102), a recess (156) set back inwards relative to the first bearing surface (150),
the frame (100) being **characterised in that** the gap (206) extends on either side of the extremum (118) and up to the first part (114) where the gap (206) has a bottom (208), so that further rotation of the temple (106) about the axis of rotation (Z) beyond the open position brings the bottom (208) of the gap (206) against a wall of the lug (120) which delimits the recess (156).

2. Frame (100) according to claim 1, **characterised in that** the lug (120) has a second bearing surface (152) which is parallel to the first part (114) when the temple (106) is in the closed position and against which said first part (114) is positioned in the closed position, and **in that** a second distance ('D') between the second bearing surface (152) and the axis of rotation (Z) is greater than the minimum spacing.

3. Frame (100) according to claim 2, **characterised in that** at the intersection of the first bearing surface (150) and the second bearing surface (152), the lug (120) has a corner (154), and **in that** the distance between the axis of rotation (Z) and the corner (154) is greater than the first distance ('d') and the second distance ('D').

4. Frame (100) according to any of claims 1 to 3, **characterised in that** the lug (120) has, around the slot (124), an added thickness (302) on each side of the lug (120) perpendicular to the axis of rotation (Z).
